# EUROPEAN PATENT APPLICATION

(11) **EP 4 668 705 A1**
(43) Date of publication of application: **24.12.2025**
(21) Application number: 24756295.2
(22) Date of filing: 08.02.2024
(51) Int. Cl.: H04L 51/04

(54) **VIRTUAL-OBJECT-BASED INTERACTION METHOD AND APPARATUS, DEVICE, STORAGE MEDIUM, AND PRODUCT**

(30) Priority: 17.02.2023 CN 202310153996
(71) Applicant: Beijing Zitiao Network Technology Co., Ltd., Beijing 100190 (CN)
(72) Inventor: HU, Xiaoyun, Beijing 100028 (CN); LI, Xinyi, Beijing 100028 (CN); HE, Zhimiao, Beijing 100028 (CN)
(74) Representative: Isarpatent
(86) International application number: PCT/CN2024/076926
(87) International publication number: WO 2024/169923

(57) **Abstract**

The embodiments of the present disclosure provide a virtual-object-based interaction method and apparatus, a device, a storage medium, and a product. The method comprises: in response to a preset interaction operation triggered by a first user in a session interface associated with a second user, displaying an interaction interface corresponding to the preset interaction operation, and obtaining in real time action information corresponding to the first user, wherein the second user is a user having a preset association relationship with the first user; displaying, in the interaction interface, interaction content associated with the preset interaction operation and a first virtual object pregenerated by the first user, the first virtual object being used for simulating action information corresponding to the first user; and based on the first virtual object and the second user, performing an interaction operation.

## Description

The present application claims priority and benefits to Chinese Patent Application No. 202310153996.9, filed on February 17, 2023, which is incorporated herein by reference in its entirety as a part of the present application.

### TECHNICAL FIELD

Embodiments of the present disclosure relate to a virtual object-based interaction method and apparatus, a device, a storage medium, and a product.

### BACKGROUND

Currently, a variety of applications provide users with instant messaging features. The instant messaging features enable the users to communicate instantly based on text, voice, and images. However, some of the instant messaging features offer limited services, and the display content and interaction modes within a chat interface are relatively simplistic.

### SUMMARY

Embodiments of the present disclosure provide a virtual object-based interaction method, an apparatus, a device, a storage medium, and a product, to solve the technical problem of the relatively simplistic interaction modes and an interaction content of instant messaging features.

An embodiment of the present disclosure provides a virtual object-based interaction method. The method includes:
displaying, in response to a preset interaction operation triggered by a first user within a chat interface associated with a second user, an interaction interface corresponding to the preset interaction operation, and obtaining, in real time, action information corresponding to the first user, where the second user is a user that has a preset association relationship with the first user;
displaying, within the interaction interface, an interaction content associated with the preset interaction operation and a first virtual object pre-generated by the first user, where the first virtual object is used to simulate the action information corresponding to the first user; and
performing an interaction operation with the second user based on the first virtual object.

An embodiment of the present disclosure provides a virtual object-based interaction apparatus. The apparatus includes:
a display module is configured to display, in response to a preset interaction operation triggered by a first user within a chat interface associated with a second user, an interaction interface corresponding to the preset interaction operation, and obtain, in real time, action information corresponding to the first user, where the second user is a user that has a preset association relationship with the first user;
a processing module is configured to display, within the interaction interface, an interaction content associated with the preset interaction operation and a first virtual object pre-generated by the first user, where the first virtual object is used to simulate the action information corresponding to the first user; and
an interaction module is configured to perform an interaction operation with the second user based on the first virtual object.

An embodiment of the present disclosure provides an electronic device. The electronic device includes: a processor and a memory, where
the memory stores computer-executable instructions; and
the computer-executable instructions stored in the memory, when executed by the processor, cause the at least one processor to perform the virtual object-based interaction method according to the above embodiments and various possible designs of the above embodiments.

An embodiment of the present disclosure provides a computer-readable storage medium storing computer-executable instructions that, when executed by a processor, cause the virtual object-based interaction method according to the above embodiments and various possible designs of the above embodiments to be implemented.

An embodiment of the present disclosure provides a computer program product including a computer program that, when executed by a processor, causes the virtual object-based interaction method according to the above embodiments and various possible designs of the above embodiments to be implemented.

### BRIEF DESCRIPTION OF DRAWINGS

To describe the technical solutions in embodiments of the present disclosure or in the prior art more clearly, the accompanying drawings for describing the embodiments or the prior art will be briefly described below. Apparently, the accompanying drawings in the description below show some embodiments of the present disclosure, and those of ordinary skill in the art may still derive other accompanying drawings from these accompanying drawings without creative efforts.
FIG. 1 is a schematic flowchart of a virtual object-based interaction method according to an embodiment of the present disclosure;
FIG. 2 is a schematic diagram of interface interaction according to an embodiment of the present disclosure;
FIG. 3 is another schematic diagram of interface interaction according to an embodiment of the present disclosure;
FIG. 4 is another schematic diagram of interface interaction according to an embodiment of the present disclosure;
FIG. 5 is another schematic diagram of interface interaction according to an embodiment of the present disclosure;
FIG. 6 is a schematic diagram of a display interface according to an embodiment of the present disclosure;
FIG. 7 is a flowchart of a virtual object-based interaction method according to another embodiment of the present disclosure;
FIG. 8 is a schematic diagram of a structure of a virtual object-based interaction apparatus according to an embodiment of the present disclosure; and
FIG. 9 is a schematic diagram of a structure of an electronic device according to an embodiment of the present disclosure.

### DETAILED DESCRIPTION

In order to make the objectives, technical solutions, and advantages of embodiments of the present disclosure clearer, the technical solutions in the embodiments of the present disclosure will be described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

In order to solve the technical problem of the relatively simplistic interaction modes and interaction contents of instant messaging features, the present disclosure provides a virtual object-based interaction method and apparatus, a device, a storage medium, and a product.

It should be noted that a virtual object-based interaction method and apparatus, a device, a storage medium, and a product provided in the present disclosure can be applied to any scenario of instant messaging.

In a current instant messaging scenario, a user can generally perform messaging with a friend only based on text, voice and video. However, the interaction modes are often relatively simplistic, resulting in suboptimal interaction effects.

In order to enrich the display content and interaction modes in an instant messaging feature, a user may preset a virtual object. During a messaging process, for different types of interaction, different interaction modes are used to perform a virtual object-based interaction operation.

In order to further enrich the display content during a messaging process, action information of a user may also be obtained in real time by means of a content acquisition apparatus preset in a terminal device, and a virtual object is controlled to simulate current action information of the user.

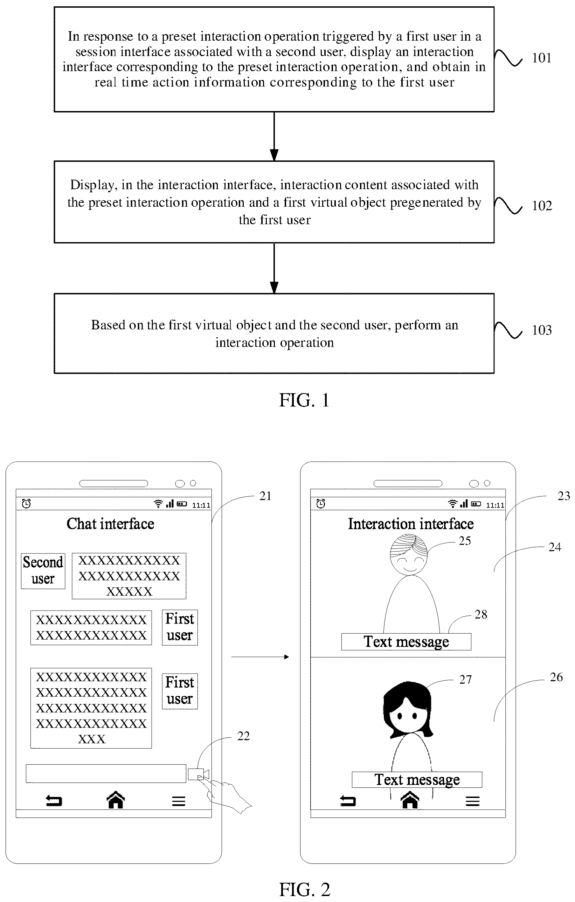

FIG. 1 is a schematic flowchart of a virtual object-based interaction method according to an embodiment of the present disclosure. As shown in FIG. 1, the method includes the following steps.

Step 101: Display, in response to a preset interaction operation triggered by a first user within a chat interface associated with a second user, an interaction interface corresponding to the preset interaction operation, and obtain, in real time, action information corresponding to the first user, where the second user is a user that has a preset association relationship with the first user.

In this embodiment, an execution entity is a virtual object-based interaction apparatus. The virtual object-based interaction apparatus may be coupled to a terminal device of a first user, so that a virtual object-based interaction operation can be performed based on a trigger operation of the first user. Optionally, the virtual object-based interaction apparatus may also be coupled to a server communicatively connected to the terminal device of the first user. Therefore, based on the trigger operation of the first user on the terminal device, the terminal device can be controlled to perform a virtual object-based interaction operation.

In this implementation, the first user may perform instant messaging with a second user within a chat interface, where the second user is a user that has a preset association relationship with the first user. For example, the second user may be a friend of the first user, or the second user may be an account followed by the first user, etc.

Within the chat interface, the first user can perform content interaction with the second user based on the mode of voice, text, video, etc. In addition, the first user can also perform a preset virtual object-based interaction operation with the second user within the chat interface. Before performing a virtual object-based interaction operation, the first user may generate a first virtual object according to actual needs. The virtual object includes a virtual avatar pre-generated by the first user, or a target special effect portrait obtained by performing image processing on an acquired user image based on special effect content pre-selected by the first user.

For example, the first user may perform operations such as face customization, dressing up and status setting on the virtual object respectively according to actual needs to obtain a three-dimensional virtual object that meets the personalized needs of the first user. Alternatively, the first user may preselect a special effect of interest, and perform special effect processing on a user image of the first user based on the special effect selected by the first user and determine the obtained target special effect portrait as a first virtual object.

Further, the first user may trigger a preset interaction operation within the chat interface. Different interaction interfaces may be displayed respectively for different preset interaction actions. **In** response to a preset interaction operation triggered by the first user within the chat interface associated with the second user, an interaction interface corresponding to the preset interaction operation is displayed.

Optionally, in order to enrich display content within a chat interface, in response to a preset interaction operation triggered by the first user within the chat interface associated with the second user, action information corresponding to the first user may also be obtained in real time. The action information includes body movement information and facial expression information corresponding to the first user.

The action information may be acquired by a content acquisition apparatus preset in a terminal device of the first user. For example, the action information may be acquired by means of a front camera or rear camera preset in the terminal device.

It should be noted that the action information is acquired by the content acquisition apparatus preset in the terminal device after sufficient authorization from the first user is obtained.

Step 102: Display, within the interaction interface, an interaction content associated with the preset interaction operation and a first virtual object pre-generated by the first user, where the first virtual object is used to simulate action information corresponding to the first user.

In this implementation, after an interaction interface is displayed, an interaction content associated with the preset interaction operation may be displayed within the interaction interface. In addition, in order to enrich display content within the interaction interface, a first virtual object corresponding to the first user may also be displayed. The first virtual object may be displayed within a preset display position corresponding to the preset interaction operation, or alternatively, may also be displayed in a display position determined by a personalization-based adjustment operation of the first user.

Further, after the action information of the first user is obtained, in order to increase realism of a virtual object-based interaction operation, the first virtual object may be controlled to simulate the action information corresponding to the first user. For example, when the current facial expression of the first user is happy, the first virtual object may simulate the happy facial expression of the first user; and when the current action of the first user is raising a hand, the first virtual object may accordingly simulate the action of raising a hand.

Step 103: Perform an interaction operation with the second user based on the first virtual object.

In this embodiment, after an interaction content and a first virtual object capable of simulating action information of a first user are displayed respectively, an interaction operation with the second user may be performed based on the first virtual object.

Optionally, performing an interaction operation with the second user based on the first virtual object includes, but is not limited to, performing interaction with the second user based on the first virtual object, or performing, based on the first virtual object, interaction with a second virtual object pre-generated by the second user.

According to the virtual object-based interaction method provided in this embodiment, an interaction interface corresponding to a preset interaction operation is displayed in response to the preset interaction operation triggered by the first user within a chat interface, and an interaction content associated with the preset interaction operation is displayed within the interaction interface, and a first virtual object pre-generated by the first user is controlled to simulate current action information of the first user, so that an interaction operation can be performed with the second user based on the first virtual object. The interaction modes of an instant messaging feature are enriched, and the display content within an interaction interface is enriched. By means of a virtual object-based interaction operation, a user is enabled to participate more in the interaction operation, thereby improving interaction effects.

Optionally, on the basis of any of the above embodiments, the chat interface includes a first interaction control that is preset.

Step 101 includes:
displaying the interaction interface in response to a trigger operation of the first user on the first interaction control.

In this embodiment, the preset interaction operation may include an interaction operation of the first user having, based on the first virtual object, a video chat with a second virtual object pre-generated by the second user.

Optionally, a first interaction control may be preset in the chat interface, and an interaction interface for a video chat may be displayed in response to a trigger operation of the first user on the first interaction control.

Further, on the basis of any one of the above embodiments, step 102 includes:
displaying, in a first display area within the interaction interface, a second virtual object pre-generated by the second user, where the second virtual object is used to simulate action information corresponding to the second user; and
displaying the first virtual object in a second display area within the interaction interface.

In this embodiment, during the process of performing a virtual object-based interaction operation, when the first user makes a video call with the second user, a second virtual object pre-generated by the second user may be displayed in a first display area within the interaction interface, where the second virtual object is used to simulate action information corresponding to the second user. A first virtual object is displayed in the second display area within the interaction interface, and the first virtual object may be controlled to execute current action information of the first user.

Therefore, the first user and the second user can implement a virtual object-based video interaction operation in the interaction interface. In addition, the virtual object can further simulate a body movement and facial expression of a user to improve the realism of a virtual object-based interaction operation.

Optionally, on the basis of any one of the above embodiments, step 103 includes:
obtaining, based on a voice content generated during interaction between the first user and the second user, text information corresponding to the voice content; and
displaying, within the interaction interface, the text information corresponding to the voice content.

In this embodiment, during a virtual object-based video interaction operation, the first user may communicate with the second user directly based on voice in a video.

As an implementable way, if it is not convenient for any user to communicate by means of voice, a voice content generated by the first user and the second user during interaction may be obtained in real time, and a speech recognition operation is performed on the voice content to obtain text information corresponding to the voice content. The text information corresponding to the voice content is displayed within the interaction interface.

Optionally, text information corresponding to the first user and the second user may be displayed in a preset display position within the interaction interface. Alternatively, the text information corresponding to the first user may be displayed in a first display area corresponding to the first user, and the text information corresponding to the second user may be displayed in a second display area corresponding to the second user. Alternatively, based on an adjustment operation of the first user, text information corresponding to a voice content may also be displayed in a display area specified by the first user, and the present disclosure does not limit this.

FIG. 2 is a schematic diagram of interface interaction according to an embodiment of the present disclosure. As shown in FIG. 2, a chat interface 21 includes a first interaction control that is preset 22. The interaction interface 23 may be displayed in response to a trigger operation of the first user on the first interaction control 22. A second virtual object 25 pre-generated by the second user may be displayed in a first display area 24 within the interaction interface 23, where the second virtual object 25 is used to simulate action information corresponding to the second user. The first virtual object 27 may be displayed in a second display area 26 within the interaction interface 23. During interaction with the first virtual object 27 based on the second virtual object 25, text information 28 corresponding to the current voice content of interaction may also be displayed in the first display area 24 and the second display area 26, respectively.

According to the virtual object-based interaction method provided in this embodiment, a first interaction control is provided within a chat interface, and an interaction interface is displayed in response to a trigger operation of the first user on the first interaction control, and a first virtual object capable of simulating action information of the first user and a second virtual object capable of simulating action information of the second user are respectively displayed in the interaction interface. Therefore, the first user can perform an interaction operation with the second user based on preset virtual objects, thereby enriching the interaction modes during instant messaging. In addition, by means of displaying a first virtual object and a second virtual object that are preset, a display effect in an interaction interface can be enriched, and thus an interaction effect can be improved.

Optionally, on the basis of any one of the above embodiments, step 102 includes:
displaying, in a first display area within the interaction interface, an image content acquired by a second terminal device of the second user, and displaying a second virtual object pre-generated by the second user; and
displaying, in a second display area within the interaction interface, an image content acquired by a first terminal device of the first user, and displaying the first virtual object.

In this embodiment, the terminal devices may be both provided with at least one content acquisition apparatus. When the device is provided with only one content acquisition apparatus, action information of a user may be acquired by the content acquisition apparatus so that a virtual object can simulate action information of the user, thereby improving the realism of an interaction operation.

Alternatively, when the terminal device is provided with only one content acquisition apparatus, an image content may be acquired by the content acquisition apparatus, and the image content may be displayed so that the first user may perform video interaction with the second user.

Optionally, an image content acquired by a second terminal device of the second user and a second virtual object pre-generated by the second user may be displayed in a first display area within the interaction interface. An image content acquired by a first terminal device of the first user and a first virtual object may be displayed in a second display area within the interaction interface.

It should be noted that in the above implementation, when the terminal device includes only one content acquisition apparatus, an image content may be acquired based on the content acquisition apparatus. The virtual object displayed within the interaction interface may be a static virtual object that does not imitate action information of a user. When the terminal device includes at least two content acquisition apparatuses, one of the content acquisition apparatuses may be controlled to acquire an image content and the other content acquisition apparatus can be controlled to acquire action information. A virtual object displayed within an interaction interface may simulate action information of a user to increase the realism of an interaction operation.

Further, on the basis of any one of the above embodiments, the displaying, in a first display area within the interaction interface, an image content acquired by a second terminal device of the second user and a second virtual object pre-generated by the second user includes:
displaying, in the first display area within the interaction interface, an image content acquired by a first content acquisition apparatus preset in a second terminal device of the second user, and displaying the second virtual object pre-generated by the second user, where the second virtual object is used to simulate the action information corresponding to the second user acquired by a second content acquisition apparatus preset in the second terminal device; and/or
the displaying, in a second display area within the interaction interface, an image content acquired by a first terminal device of the first user, and displaying the first virtual object includes:
   displaying, in the second display area within the interaction interface, an image content acquired by a first content acquisition apparatus preset in the first terminal device of the first user and displaying the first virtual object, where the first virtual object is used to simulate the action information corresponding to the first user acquired by the first content acquisition apparatus preset in the first terminal device.

In this embodiment, when the terminal device includes at least two content acquisition apparatuses, one of the content acquisition apparatuses can be controlled to acquire an image content and the other content acquisition apparatus can be controlled to acquire action information.

Based on the above terminal device, an image content acquired by the first content acquisition apparatus preset in the second terminal device of the second user and a second virtual object pre-generated by the second user may be displayed in the first display area within the interaction interface, where the second virtual object is used to simulate action information corresponding to the second user acquired by the second content acquisition apparatus preset in the second terminal device; and/or an image content acquired by the first content acquisition apparatus preset in the first terminal device of the first user and the first virtual object may be displayed in the second display area within the interaction interface, where the first virtual object is used to simulate action information corresponding to the first user acquired by the first content acquisition apparatus preset in the first terminal device.

According to the virtual object-based interaction method provided in this embodiment, a first content acquisition apparatus and a second content acquisition apparatus that are preset in a terminal device are respectively used to perform a content acquisition operation, and an image content acquired by the first content acquisition apparatus is displayed and a virtual object is controlled to simulate action information corresponding to a user acquired by the second content acquisition apparatus, thereby further enriching display content in an interaction interface, so that the user can simultaneously view the image content and an action of the other party, thereby enhancing interaction effects for users during interaction.

Optionally, on the basis of any one of the above embodiments, at least one target media content sent by the second user is displayed within the chat interface.

Step 101 includes:
displaying, in response to a trigger operation of the first user on any of the at least one target media content, an interaction interface for playback of the target media content.

In this embodiment, the second user may share target media content with the first user and at least one target media content sent by the second user is displayed within the chat interface.

The first user may view the target media content. In order to enable the second user to understand the reaction of the first user when viewing the target media content, action information of the first virtual object of the first user may be recorded while the first user is browsing the target media content.

Optionally, in response to a trigger operation of the first user on any of the at least one target media content, an interaction interface for playback of the target media content is displayed, and the target media content is played and action information of the first virtual object of the first user may be recorded within the interaction interface.

Further, on the basis of any one of the above embodiments, step 102 includes:
displaying the target media content in a first display area within the interaction interface; and
displaying the first virtual object in a second display area within the interaction interface.

In this embodiment, when the second user is not online, or when the second user is online but is not viewing the chat interface, only a first virtual object of the first user may be displayed within the interaction interface.

Optionally, the interaction interface may include a first display area and a second display area, and target media content may be displayed within the first display area. A first virtual object is displayed in the second display area within the interaction interface, where the first virtual object may simulate real-time action information of the first user.

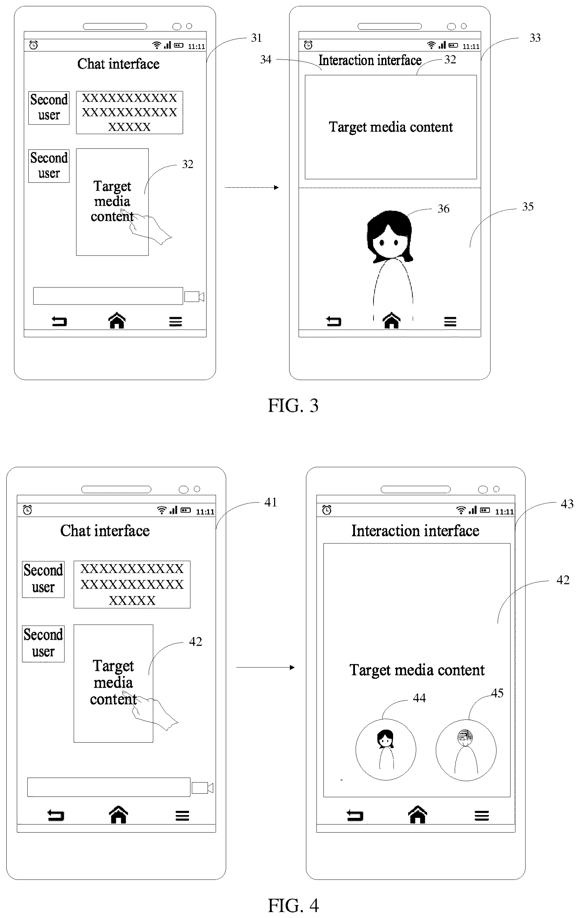

FIG. 3 is another schematic diagram of interface interaction according to an embodiment of the present disclosure. As shown in FIG. 3, at least one target media content 32 sent by a second user is displayed within a chat interface 31. An interaction interface 33 may be displayed in response to a trigger operation of a first user on any of the at least one target media content 32. The target media content 32 may be displayed in a first display area 34 within the interaction interface 33. A first virtual object 36 may be displayed in a second display area 35 within the interaction interface 33.

Further, on the basis of any one of the above embodiments, step 103 includes:
during the playback of the target media content, performing a recording operation on action information of the first virtual object to obtain a recording result; and
sending the recording result to the chat interface.

In this embodiment, in order to enable the second user to understand the reaction of the first user when viewing the target media content, action information of the first virtual object of the first user may be recorded while the first user is browsing the target media content.

Optionally, during the playback of target media content, a recording operation is performed on action information of a first virtual object to obtain a recording result. The recording result is sent to a chat interface. Within the chat interface, the recording result may have a preset association with the target media content. For example, the recording result may reference the target media content. The second user may view, by means of a trigger operation on the recording result, the reaction of the first user when viewing the target media content.

According to the virtual object-based interaction method provided in this embodiment, a content acquisition apparatus is turned on to acquire current action information of the first user when the first user views target media content sent by the second user, and a first virtual object is controlled to simulate the action information and the action information of the first virtual object is recorded. Therefore, the second user is enabled to more intuitively understand the reaction of the first user when viewing the target media content. In addition, the display content and the interaction modes during an interaction process can be enriched.

Optionally, on the basis of any one of the above embodiments, step 102 includes:
playing the target media content within the interaction interface; and
displaying, in a display area preset within the interaction interface, the first virtual object and a second virtual object pre-generated by the second user, respectively.

In this embodiment, when the first user and the second user are simultaneously viewing chat content within the chat interface, an interaction interface may be displayed in response to a trigger operation of the first user on the target media content, and a first virtual object corresponding to the first user and a second virtual object corresponding to the second user may be displayed simultaneously within the interaction interface.

Optionally, the target media content may be played within the interaction interface. The first virtual object and a second virtual object pre-generated by the second user are displayed in the display areas preset within the interaction interface, respectively. The target media content may be played in full screen, and the first virtual object corresponding to the first user and the second virtual object corresponding to the second user may be displayed at the bottom of the interface. Alternatively, the target media content may be played in the first display area, and the first virtual object corresponding to the first user and the second virtual object corresponding to the second user may be displayed in the second display area. The present disclosure does not limit the layout within the interaction interface.

FIG. 4 is another schematic diagram of interface interaction according to an embodiment of the present disclosure. As shown in FIG. 4, at least one target media content 42 sent by the second user is displayed within the chat interface 41. An interaction interface 43 may be displayed in response to a trigger operation of a first user on any of the at least one target media content 42. The target media content 42 is displayed within the interaction interface 43, and a first virtual object 44 and a second virtual object 45 pre-generated by the second user are displayed in preset display areas, respectively.

According to the virtual object-based interaction method provided in this embodiment, target media content is played in response to a trigger operation of the first user on the target media content when the first user and the second user simultaneously perform instant messaging within the chat interface, and the first virtual object and a second virtual object pre-generated by the second user are respectively displayed in the display areas preset within the interaction interface, so that the first user and the second user are enabled to simultaneously view the target media content, and more intuitively view the actual reaction of the other party when viewing the target media content, thereby enhancing interaction effects.

Optionally, on the basis of any one of the above embodiments, step 101 includes:
displaying, within the chat interface, to-be-exchanged content sent by the second user and an exchange control associated with the to-be-exchanged content, where the to-be-exchanged content includes content acquired by at least two content acquisition apparatuses in a second terminal device of the second user; and
displaying, in response to a trigger operation of the first user on the exchange control, an interaction interface for acquiring target exchange content.

In this embodiment, when the terminal device of the user is provided with at least two content acquisition apparatuses, both of the two content acquisition apparatuses can be turned on to perform a content acquisition operation. Optionally, an image content may be acquired by one of the content acquisition apparatuses, and action information of the user may be acquired by the other content acquisition apparatus, to control a virtual object to execute the action information. In order to enrich the virtual object-based interaction modes, a content exchange operation may be performed based on to-be-exchanged content from the two content acquisition apparatuses.

Optionally, to-be-exchanged content sent by the second user and an exchange control associated with the to-be-exchanged content may be displayed within the chat interface, where the to-be-exchanged content includes content acquired by at least two content acquisition apparatuses in the second terminal device of the second user. An interaction interface for acquiring target exchange content is displayed in response to a trigger operation of the first user on the exchange control.

Further, on the basis of any one of the above embodiments, step 102 includes:
displaying, within the interaction interface, an image content acquired by a first content acquisition apparatus preset in a first terminal device of the first user, and displaying the first virtual object, where the first virtual object is used to simulate the action information corresponding to the first user acquired by the first content acquisition apparatus preset in the first terminal device; and
generating the target exchange content in response to a trigger operation of the first user on an acquisition control preset within the interaction interface.

In this embodiment, the first user may generate, based on the to-be-exchanged content, target exchange content obtained by performing a content acquisition operation by the two content acquisition apparatuses.

Optionally, an image content acquired by a first content acquisition apparatus preset in a first terminal device of the first user and the first virtual object may be displayed within the interaction interface, where the first virtual object is used to simulate the action information corresponding to the first user acquired by the first content acquisition apparatus preset in the first terminal device. The interaction interface may further be provided with an acquisition control, and the target exchange content may be generated in response to a trigger operation of the first user on an acquisition control preset within the interaction interface.

Further, on the basis of any one of the above embodiments, step 103 includes:
sending, in response to a trigger operation of the first user on a send control preset within the interaction interface, the target exchange content including the first virtual object to the chat interface associated with the second user.

In this embodiment, the interaction interface may further be provided with a send control. After the first user generates, based on the to-be-exchanged content, target exchange content obtained by performing content acquisition operations by the two content acquisition apparatuses, in response to a trigger operation of the first user on a send control preset within the interaction interface, target exchange content including the first virtual object is sent to a chat interface associated with the second user.

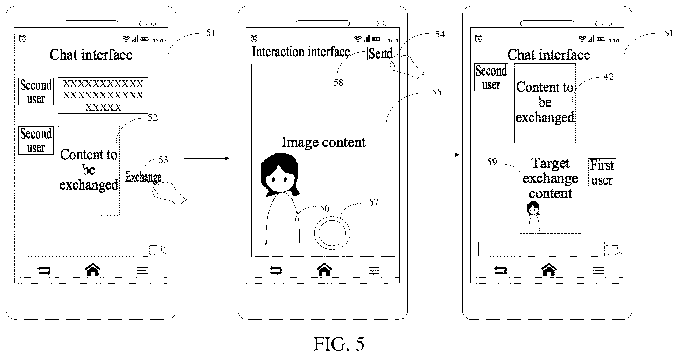

FIG. 5 is another schematic diagram of interface interaction according to an embodiment of the present disclosure. As shown in FIG. 5, to-be-exchanged content 52 sent by the second user and an exchange control 53 associated with the to-be-exchanged content may be displayed within the chat interface 51. Optionally, the to-be-exchanged content 52 includes content acquired by at least two content acquisition apparatuses in the second terminal device of the second user. The first user may perform a trigger operation on the exchange control 53, and in response to the trigger operation, an interaction interface 54 for acquiring target exchange content may be displayed. An image content 55 acquired by a first content acquisition apparatus preset in a first terminal device of the first user and the first virtual object 56 may be displayed within the interaction interface 54, where the first virtual object is used to simulate the action information corresponding to the first user acquired by the first content acquisition apparatus preset in the first terminal device.

Further, the interaction interface 54 is also provided with an acquisition control 57 and a send control 58, and target exchange content 59 is generated in response to a trigger operation of the first user on the acquisition control 57. In response to a trigger operation of the first user on the send control 58 preset within the interaction interface 54, target exchange content 59 including the first virtual object is sent to the chat interface 51 associated with the second user.

According to the virtual object-based interaction method provided in this embodiment, to-be-exchanged content, acquired by at least two content acquisition apparatuses in a terminal device of the second user, sent by the second user and an exchange control associated with the to-be-exchanged content may be displayed within the chat interface, so that the target exchange content can be acquired by the at least two content acquisition apparatuses in the first terminal device in response to a trigger operation of the first user on the exchange control, where the target exchange content includes a first virtual object that can simulate an action of the first user. Further, the interaction modes during instant messaging are enriched, and the display content within a chat interface is enriched.

Further, on the basis of any one of the above embodiments, before step 101, the method further includes:
obtaining at least one target media content sent by the second user; and
displaying the at least one target media content within the chat interface; or
before the displaying, in response to a preset interaction operation triggered by a first user within a chat interface associated with a second user, an interaction interface corresponding to the preset interaction operation, the method further includes:
   displaying prompt information that is preset based on the at least one target media content; and
   displaying, in response to a trigger operation of the first user on prompt information associated with the second user, a chat interface associated with the second user.

In this embodiment, the second user may share media content with the first user. The terminal device of the first user may obtain at least one target media content sent by the second user. When the first user is currently browsing within the chat interface, after the at least one target media content sent by the second user is obtained, the at least one target media content may be directly displayed within the chat interface.

As an implementable way, if the first user is not currently browsing within the chat interface, in order to prompt the first user to view the at least one target media content sent by the second user, prompt information that is preset may be displayed based on the at least one target media content. Therefore, the first user can implement a viewing operation on the at least one target media content by means of a trigger operation on the prompt information.

Accordingly, in response to a trigger operation of the first user on the prompt information associated with the second user, a chat interface associated with the second user may be displayed and the at least one target media content may be displayed within a drawing interface.

Optionally, on the basis of any one of the above embodiments, the displaying prompt information that is preset based on the at least one target media content includes:
determining a second virtual object corresponding to the second user; and
displaying, in the prompt information, prompt content associated with the at least one target media content and the second virtual object.

In this embodiment, in order to make it more intuitive for the first user to understand a second user that currently sends the target media content and the at least one target media content sent by the second user, a second virtual object corresponding to the second user may be determined. Prompt content associated with the at least one target media content and the second virtual object are displayed in the prompt information. By way of example, the prompt content may be that the second user has sent three pieces of target media content.

Optionally, in the prompt information, status information set by the second user for the second virtual object can be displayed. By way of example, the status information includes, but is not limited to, a laid-back status, a punk health status, a dog-walking status, a hardworking status, an eating status, etc.

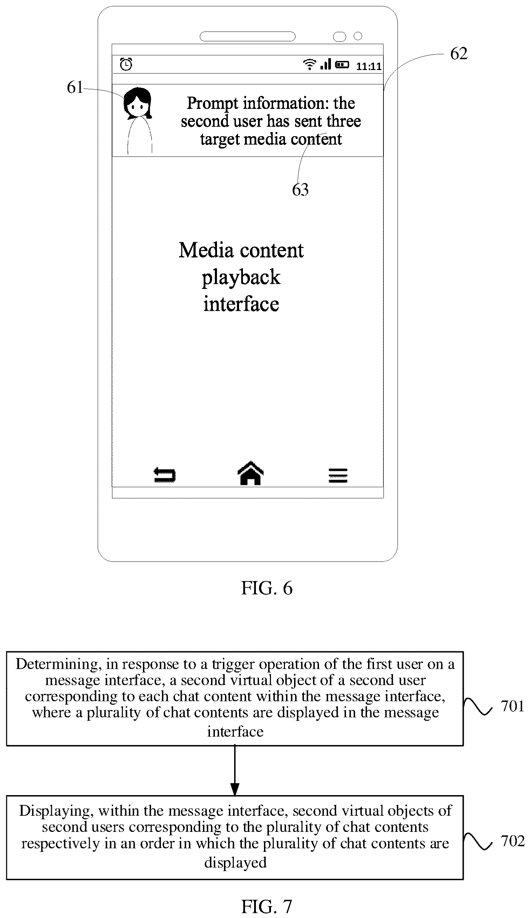

FIG. 6 is a schematic diagram of a display interface according to an embodiment of the present disclosure. As shown in FIG. 6, after at least one target media content sent by the second user is obtained, a second virtual object 61 corresponding to the second user may be determined. Prompt information 62 is displayed within a display interface. The prompt information 62 includes prompt content 63 associated with the at least one target media content and the second virtual object 61.

According to the virtual object-based interaction method provided in this embodiment, after the at least one target media content sent by the second user is obtained, a second virtual object corresponding to the second user may be determined. Prompt information including a second virtual object is displayed within a display interface, thereby enriching display content within the prompt information, so that the first user can more intuitively understand the at least one piece of currently received target media content, thereby improving interaction effects.

FIG. 7 is a flowchart of a virtual object-based interaction method according to another embodiment of the present disclosure. On the basis of any one of the above embodiments, as shown in FIG. 7, the method further includes:
step 701: determining, in response to a trigger operation of the first user on a message interface, a second virtual object of a second user corresponding to each chat content within the message interface, where a plurality of chat contents are displayed in the message interface; and
step 702: displaying, within the message interface, second virtual objects of second users corresponding to the plurality of chat contents respectively in an order in which the plurality of chat contents are displayed.

In this embodiment, an instant messaging feature is generally provided with a message interface, and a plurality of chat contents may be displayed within the message interface. Different from some message interfaces, in order to make it more intuitive for the first user to determine a second user corresponding to each chat content, a second virtual object corresponding to the second user may be displayed within the message interface.

Optionally, a second virtual object of a second user corresponding to each chat content within the message interface is determined in response to a trigger operation of the first user on a message interface. Second virtual objects of second users corresponding to the plurality of chat contents are displayed within the message interface and correspondingly in the order in which the plurality of pieces chat content are displayed.

Further, on the basis of any one of the above embodiments, step 702 includes:
determining status information corresponding to each of the second virtual objects, where the status information is preset by the second user; and
for each of the second virtual objects within the message interface, displaying a second virtual object associated with the status information, where the second virtual objects corresponding to the plurality of chat contents are correspondingly displayed in the order in which the plurality of chat contents are displayed.

In this embodiment, a user may also set status information for a virtual object after the virtual object is set. By way of example, the status information includes, but is not limited to, a laid-back status, a punk health status, a dog-walking status, a hardworking status, an eating status, etc. The user may set status information for the virtual object based on his/her current status of mind, mood, etc.

Optionally, in order to make it more intuitive for the first user to understand the current status of a second user, status information of a second virtual object corresponding to the second user may be determined for each second user corresponding to each chat content within a message interface. For each of the second virtual objects within the message interface, a second virtual object associated with the status information is displayed, where the second virtual objects corresponding to the plurality of chat contents are correspondingly displayed in the order in which the plurality of chat contents are displayed.

Further, on the basis of any one of the above embodiments, after step 702, the method further includes:
displaying, in response to a trigger operation of the first user on any second virtual object, a chat interface associated with a second user corresponding to the second virtual object.

In this embodiment, since a plurality of chat contents are included within a message interface, and a second virtual object of a second user corresponding to the chat content is displayed at a corresponding position of each chat content, the first user can perform a jump display of the chat interface based on a trigger operation on the second virtual object.

Optionally, a chat interface associated with a second user corresponding to the second virtual object may be displayed in response to a trigger operation of the first user on any second virtual object.

According to the virtual object-based interaction method provided in this embodiment, based on the display order corresponding to each chat content and the corresponding second user, a second virtual object of a second user corresponding to each chat content is displayed within the message interface and correspondingly in the order in which the plurality of chat contents are displayed. Therefore, a user is enabled to more intuitively understand each chat content in a message interface.

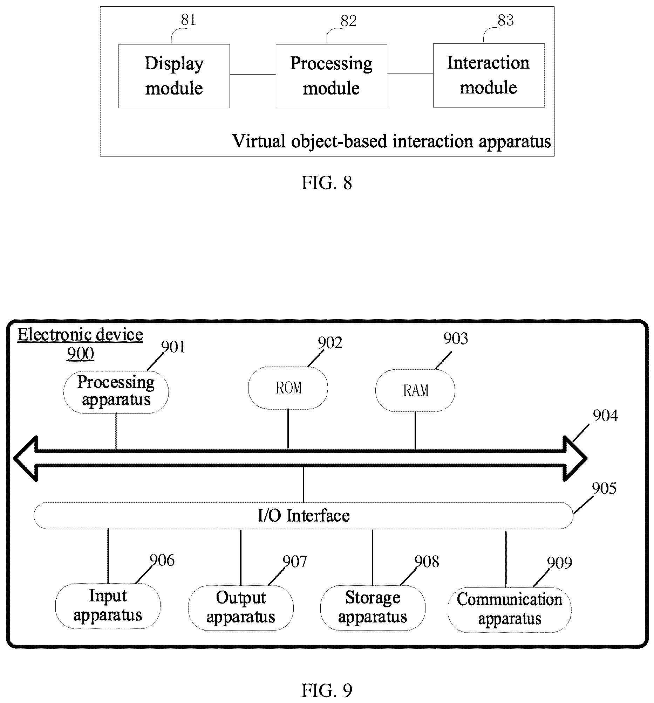

FIG. 8 is a schematic diagram of a structure of a virtual object-based interaction apparatus according to an embodiment of the present disclosure. As shown in FIG. 8, the apparatus includes: a display module 81, a processing module 82 and an interaction module 83, where the display module 81 is configured to display, in response to a preset interaction operation triggered by a first user within a chat interface associated with a second user, an interaction interface corresponding to the preset interaction operation, and obtain, in real time, action information corresponding to the first user, where the second user is a user that has a preset association relationship with the first user; the processing module 82 is configured to display, within the interaction interface, an interaction content associated with the preset interaction operation and a first virtual object pre-generated by the first user, where the first virtual object is used to simulate action information corresponding to the first user; and the interaction module 83 is configured to perform an interaction operation with the second user based on the first virtual object.

Further, on the basis of any one of the above embodiments, the action information includes body movement information and facial expression information corresponding to the first user.

Further, on the basis of any one of the above embodiments, the virtual object includes a virtual avatar pre-generated by the user, or a target special effect portrait obtained by performing image processing on an acquired user image based on the special effect content pre-selected by the user.

Further, on the basis of any of the above embodiments, the chat interface includes a first interaction control that is preset. The display module is configured to: display the interaction interface in response to a trigger operation of the first user on the first interaction control.

Further, on the basis of any one of the above embodiments, the processing module is configured to: display, in a first display area within the interaction interface, a second virtual object pre-generated by the second user, where the second virtual object is used to simulate action information corresponding to the second user; and display the first virtual object in a second display area within the interaction interface.

Further, on the basis of any one of the above embodiments, the interaction module is configured to: obtain, based on a voice content generated during interaction between the first user and the second user, text information corresponding to the voice content; and display, within the interaction interface, the text information corresponding to the voice content.

Further, on the basis of any one of the above embodiments, the processing module is configured to: display, in a first display area within the interaction interface, an image content acquired by a second terminal device of the second user, and display a second virtual object pre-generated by the second user; and display, in a second display area within the interaction interface, an image content acquired by a first terminal device of the first user and display the first virtual object.

Further, on the basis of any one of the above embodiments, the processing module is configured to: display, in the first display area within the interaction interface, an image content acquired by a first content acquisition apparatus preset in a second terminal device of the second user, and display the second virtual object pre-generated by the second user, where the second virtual object is used to simulate the action information corresponding to the second user acquired by a second content acquisition apparatus preset in the second terminal device; and/or the processing module is configured to: display, in the second display area within the interaction interface, an image content acquired by a first content acquisition apparatus preset in a first terminal device of the first user and display the first virtual object, where the first virtual object is used to simulate the action information corresponding to the first user acquired by the first content acquisition apparatus preset in the first terminal device.

Further, on the basis of any one of the above embodiments, at least one target media content sent by the second user is displayed within the chat interface. The display module is configured to: display, in response to a trigger operation of the first user on any of the at least one target media content, an interaction interface for playback of the target media content.

Further, on the basis of any one of the above embodiments, the processing module is configured to: display the target media content in a first display area within the interaction interface; and display the first virtual object in a second display area within the interaction interface.

Further, on the basis of any one of the above embodiments, the interaction module is configured to: during the playback of the target media content, perform a recording operation on action information of the first virtual object to obtain a recording result; and send the recording result to the chat interface.

Further, on the basis of any one of the above embodiments, the processing module is configured to: play the target media content within the interaction interface; and display, in a display area preset within the interaction interface, the first virtual object and a second virtual object pre-generated by the second user, respectively.

Further, on the basis of any one of the above embodiments, the display module is configured to: display, within the chat interface, to-be-exchanged content sent by the second user and an exchange control associated with the to-be-exchanged content, where the to-be-exchanged content includes content acquired by at least two content acquisition apparatuses in a second terminal device of the second user; and display, in response to a trigger operation of the first user on the exchange control, an interaction interface for acquiring target exchange content.

Further, on the basis of any one of the above embodiments, the processing module is configured to: display, within the interaction interface, an image content acquired by a first content acquisition apparatus preset in a first terminal device of the first user and display the first virtual object, where the first virtual object is used to simulate the action information corresponding to the first user acquired by the first content acquisition apparatus preset in the first terminal device; and generate the target exchange content in response to a trigger operation of the first user on an acquisition control preset within the interaction interface.

Further, on the basis of any one of the above embodiments, the interaction module is configured to: send, in response to a trigger operation of the first user on a send control preset within the interaction interface, the target exchange content including the first virtual object to the chat interface associated with the second user.

Further, on the basis of any one of the above embodiments, the apparatus further includes: an obtaining module is configured to obtain at least one target media content sent by the second user; and a display module is configured to display the at least one target media content within the chat interface. Alternatively, the apparatus further includes: a display module is configured to display prompt information that is preset based on the at least one target media content; and a processing module is configured to display, in response to a trigger operation of the first user on prompt information associated with the second user, a chat interface associated with the second user.

Further, on the basis of any one of the above embodiments, the display module is configured to: determine a second virtual object corresponding to the second user; and display, in the prompt information, prompt content associated with the at least one target media content and the second virtual object.

Further, on the basis of any one of the above embodiments, the apparatus further includes: a determination module is configured to determine, in response to a trigger operation of the first user on a message interface, a second virtual object of a second user corresponding to each chat content within the message interface, where a plurality of chat contents are displayed in the message interface; and a display module is configured to display, within the message interface, second virtual objects of second users corresponding to the plurality of chat contents respectively in an order in which the plurality of chat contents are displayed.

Further, on the basis of any one of the above embodiments, the display module is configured to: determine status information corresponding to each of the second virtual objects, where the status information is preset by the second user; and for each of the second virtual objects within the message interface, display a second virtual object associated with the status information, where the second virtual objects corresponding to the plurality of chat contents are correspondingly displayed in the order in which the plurality of chat contents are displayed.

Further, on the basis of any one of the above embodiments, the apparatus further includes: a display module is configured to display, in response to a trigger operation of the first user on any second virtual object, a chat interface associated with a second user corresponding to the second virtual object.

The device provided in this embodiment may be configured to perform the technical solution of the above method embodiment. The implementation principle and technical effects thereof are similar, and are not described herein again in this embodiment.

To implement the above embodiments, an embodiment of the present disclosure further provides an electronic device. The electronic device includes: a processor and a memory, where
the memory stores computer-executable instructions; and
the computer-executable instructions stored in the memory, when executed by the processor, cause the processor to perform the virtual object-based interaction method according to any one of the above embodiments.

FIG. 9 is a schematic diagram of a structure of an electronic device according to an embodiment of the present disclosure. As shown in FIG. 9, the electronic device 900 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic device shown in FIG. 9 is merely an example, and shall not impose any limitation on the function and scope of use of the embodiments of the present disclosure.

As shown in FIG. 9, the electronic device 900 may include a processing apparatus (e.g., a central processing unit or a graphics processing unit) 901 that may perform a variety of appropriate actions and processing in accordance with a program stored in a read-only memory (ROM) 902 or a program loaded from a storage apparatus 908 into a random access memory (RAM) 903. The RAM 903 further stores various programs and data required for the operation of the electronic device 900. The processing apparatus 901, the ROM 902, and the RAM 903 are connected to one another through a bus 904. An input/output (I/O) interface 905 is also connected to the bus 904.

Generally, the following apparatuses may be connected to the I/O interface 905: an input apparatus 906 including, for example, a touchscreen, a touchpad, a keyboard, a mouse, a camera, a microphone, an accelerometer, and a gyroscope; an output apparatus 907 including, for example, a liquid crystal display (LCD), a speaker, and a vibrator; the storage apparatus 908 including, for example, a tape and a hard disk; and a communication apparatus 909. The communication apparatus 909 may allow the electronic device 900 to perform wireless or wired communication with other devices to exchange data. Although FIG. 9 shows the electronic device 900 having various apparatuses, it should be understood that it is not required to implement or have all of the shown apparatuses. It may be an alternative to implement or have more or fewer apparatuses.

**In** particular, according to an embodiment of the present disclosure, the process described above with reference to the flowchart may be implemented as a computer software program. For example, this embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 909, installed from the storage apparatus 908, or installed from the ROM 902. When the computer program is executed by the processing apparatus 901, the above-mentioned functions defined in the method of the embodiment of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

To implement the above embodiments, an embodiment of the present disclosure further provides a computer-readable storage medium storing computer-executable instructions that, when executed by a processor, cause the virtual object-based interaction method according to any one of the above embodiments to be implemented.

To implement the above embodiments, an embodiment of the present disclosure further provides a computer program product including a computer program that, when executed by a processor, causes the virtual object-based interaction method according to any one of the above embodiments to be implemented.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to perform the method shown in the above embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, a virtual object-based interaction method is provided. The method includes:
displaying, in response to a preset interaction operation triggered by a first user within a chat interface associated with a second user, an interaction interface corresponding to the preset interaction operation, and obtaining, in real time, action information corresponding to the first user, where the second user is a user that has a preset association relationship with the first user;
displaying, within the interaction interface, an interaction content associated with the preset interaction operation and a first virtual object pre-generated by the first user, where the first virtual object is used to simulate the action information corresponding to the first user; and
performing an interaction operation with the second user based on the first virtual object.

According to one or more embodiments of the present disclosure, the chat interface includes a first interaction control that is preset; and
the displaying, in response to a preset interaction operation triggered by a first user within a chat interface associated with a second user, an interaction interface corresponding to the preset interaction operation includes:
displaying the interaction interface in response to a trigger operation of the first user on the first interaction control.

According to one or more embodiments of the present disclosure, the displaying, within the interaction interface, an interaction content associated with the preset interaction operation and a first virtual object pre-generated by the first user includes:
displaying, in a first display area within the interaction interface, a second virtual object pre-generated by the second user, where the second virtual object is used to simulate action information corresponding to the second user; and
displaying the first virtual object in a second display area within the interaction interface.

According to one or more embodiments of the present disclosure, the performing an interaction operation with the second user based on the first virtual object includes:
obtaining, based on a voice content generated during interaction between the first user and the second user, text information corresponding to the voice content; and
displaying, within the interaction interface, the text information corresponding to the voice content.

According to one or more embodiments of the present disclosure, the displaying, within the interaction interface, an interaction content associated with the preset interaction operation and a first virtual object pre-generated by the first user includes:
displaying, in the first display area within the interaction interface, an image content acquired by a second terminal device of the second user and displaying a second virtual object pre-generated by the second user; and
displaying, in a second display area within the interaction interface, an image content acquired by a first terminal device of the first user and displaying the first virtual object.

According to one or more embodiments of the present disclosure, the displaying, in a first display area within the interaction interface, an image content acquired by a second terminal device of the second user, and displaying a second virtual object pre-generated by the second user includes:
displaying, in the first display area within the interaction interface, an image content acquired by a first content acquisition apparatus preset in a second terminal device of the second user and displaying the second virtual object pre-generated by the second user, where the second virtual object is used to simulate the action information corresponding to the second user acquired by a second content acquisition apparatus preset in the second terminal device; and/or
the displaying, in a second display area within the interaction interface, an image content acquired by a first terminal device of the first user, and displaying the first virtual object includes:
   displaying, in the second display area within the interaction interface, an image content acquired by a first content acquisition apparatus preset in the first terminal device of the first user, and displaying the first virtual object, where the first virtual object is used to simulate the action information corresponding to the first user acquired by the first content acquisition apparatus preset in the first terminal device.

According to one or more embodiments of the present disclosure, at least one target media content sent by the second user is displayed within the chat interface; and
the displaying, in response to a preset interaction operation triggered by a first user within a chat interface associated with a second user, an interaction interface corresponding to the preset interaction operation includes:
displaying, in response to a trigger operation of the first user on any of the at least one target media content, an interaction interface for playback of the target media content.

According to one or more embodiments of the present disclosure, the displaying, within the interaction interface, an interaction content associated with the preset interaction operation and a first virtual object pre-generated by the first user includes:
displaying the target media content in a first display area within the interaction interface; and
displaying the first virtual object in a second display area within the interaction interface.

According to one or more embodiments of the present disclosure, the performing an interaction operation with the second user based on the first virtual object includes:
during the playback of the target media content, performing a recording operation on action information of the first virtual object to obtain a recording result; and
sending the recording result to the chat interface.

According to one or more embodiments of the present disclosure, the displaying, within the interaction interface, an interaction content associated with the preset interaction operation and a first virtual object pre-generated by the first user includes:
playing the target media content within the interaction interface; and
displaying, in a display area preset within the interaction interface, the first virtual object and a second virtual object pre-generated by the second user, respectively.

According to one or more embodiments of the present disclosure, the displaying, in response to a preset interaction operation triggered by a first user within a chat interface associated with a second user, an interaction interface corresponding to the preset interaction operation includes:
displaying, within the chat interface, to-be-exchanged content sent by the second user and an exchange control associated with the to-be-exchanged content, where the to-be-exchanged content includes content acquired by at least two content acquisition apparatuses in a second terminal device of the second user; and
displaying, in response to a trigger operation of the first user on the exchange control, an interaction interface for acquiring target exchange content.

According to one or more embodiments of the present disclosure, the displaying, within the interaction interface, an interaction content associated with the preset interaction operation and a first virtual object pre-generated by the first user includes:
displaying, within the interaction interface, an image content acquired by a first content acquisition apparatus preset in a first terminal device of the first user and displaying the first virtual object, where the first virtual object is used to simulate action information corresponding to the first user acquired by the first content acquisition apparatus preset in the first terminal device; and
generating the target exchange content in response to a trigger operation of the first user on an acquisition control preset within the interaction interface.

According to one or more embodiments of the present disclosure, the performing an interaction operation with the second user based on the first virtual object includes:
sending, in response to a trigger operation of the first user on a send control preset within the interaction interface, the target exchange content including the first virtual object to the chat interface associated with the second user.

According to one or more embodiments of the present disclosure, before the displaying, in response to a preset interaction operation triggered by a first user within a chat interface associated with a second user, an interaction interface corresponding to the preset interaction operation, the method further includes:
obtaining at least one target media content sent by the second user; and
displaying the at least one target media content within the chat interface; or
before the displaying, in response to a preset interaction operation triggered by a first user within a chat interface associated with a second user, an interaction interface corresponding to the preset interaction operation, the method further includes:
   displaying prompt information that is preset based on the at least one target media content; and
   displaying, in response to a trigger operation of the first user on prompt information associated with the second user, a chat interface associated with the second user.

According to one or more embodiments of the present disclosure, the displaying prompt information that is preset based on the at least one target media content includes:
determining a second virtual object corresponding to the second user; and
displaying, in the prompt information, prompt content associated with the at least one target media content and the second virtual object.

According to one or more embodiments of the present disclosure, the method further includes:
determining, in response to a trigger operation of the first user on a message interface, a second virtual object of a second user corresponding to each chat content within the message interface, where a plurality of chat contents are displayed in the message interface; and
displaying, within the message interface and correspondingly in which the plurality of chat contents are displayed, second virtual objects of second users corresponding to the plurality of chat contents.

According to one or more embodiments of the present disclosure, the displaying, within the message interface and correspondingly in which the plurality of chat contents are displayed, second virtual objects of second users corresponding to the plurality of chat contents includes:
determining status information corresponding to each of the second virtual objects, where the status information is preset by the second user; and
for each of the second virtual objects within the message interface, displaying a second virtual object associated with the status information, where the second virtual objects corresponding to the plurality of chat contents are correspondingly displayed in the order in which the plurality of chat contents are displayed.

According to one or more embodiments of the present disclosure, after the displaying, within the message interface, second virtual objects of second users corresponding to the plurality of chat contents respectively in an order in which the plurality of chat contents are displayed, the method further includes:
displaying, in response to a trigger operation of the first user on any second virtual object, a chat interface associated with a second user corresponding to the second virtual object.

According to one or more embodiments of the present disclosure, a virtual object-based interaction apparatus is provided. The apparatus includes:
a display module is configured to display, in response to a preset interaction operation triggered by a first user within a chat interface associated with a second user, an interaction interface corresponding to the preset interaction operation, and obtain, in real time, action information corresponding to the first user, where the second user is a user that has a preset association relationship with the first user;
a processing module is configured to display, within the interaction interface, an interaction content associated with the preset interaction operation and a first virtual object pre-generated by the first user, where the first virtual object is used to simulate the action information corresponding to the first user; and
an interaction module is configured to perform an interaction operation with the second user based on the first virtual object.

According to one or more embodiments of the present disclosure, the chat interface includes a first interaction control that is preset; and
the display module is configured to:
display the interaction interface in response to a trigger operation of the first user on the first interaction control.

According to one or more embodiments of the present disclosure, the processing module is configured to:
display, in a first display area within the interaction interface, a second virtual object pre-generated by the second user, where the second virtual object is used to simulate action information corresponding to the second user; and
display the first virtual object in a second display area within the interaction interface.

According to one or more embodiments of the present disclosure, the interaction module is configured to:
obtain, based on a voice content generated during interaction between the first user and the second user, text information corresponding to the voice content; and
display, within the interaction interface, the text information corresponding to the voice content.

According to one or more embodiments of the present disclosure, the processing module is configured to:
display, in the first display area within the interaction interface, an image content acquired by a second terminal device of the second user, and display a second virtual object pre-generated by the second user; and
display, in a second display area within the interaction interface, an image content acquired by a first terminal device of the first user, and display the first virtual object.

According to one or more embodiments of the present disclosure, the processing module is configured to:
display, in the first display area within the interaction interface, an image content acquired by a first content acquisition apparatus preset in a second terminal device of the second user, and display the second virtual object pre-generated by the second user, where the second virtual object is used to simulate the action information corresponding to the second user acquired by a second content acquisition apparatus preset in the second terminal device; and/or
the processing module is configured to:
   display, in the second display area within the interaction interface, an image content acquired by a first content acquisition apparatus preset in a first terminal device of the first user and display the first virtual object, where the first virtual object is used to simulate the action information corresponding to the first user acquired by the first content acquisition apparatus preset in the first terminal device.

According to one or more embodiments of the present disclosure, at least one target media content sent by the second user is displayed within the chat interface; and
the display module is configured to:
display, in response to a trigger operation of the first user on any of the at least one target media content, an interaction interface for playback of the target media content.

According to one or more embodiments of the present disclosure, the processing module is configured to:
display the target media content in a first display area within the interaction interface; and
display the first virtual object in a second display area within the interaction interface.

According to one or more embodiments of the present disclosure, the interaction module is configured to:
during the playback of the target media content, perform a recording operation on action information of the first virtual object to obtain a recording result; and
send the recording result to the chat interface.

According to one or more embodiments of the present disclosure, the processing module is configured to:
play the target media content within the interaction interface; and
display, in a display area preset within the interaction interface, the first virtual object and a second virtual object pre-generated by the second user, respectively.

According to one or more embodiments of the present disclosure, the display module is configured to:
display, within the chat interface, to-be-exchanged content sent by the second user and an exchange control associated with the to-be-exchanged content, where the to-be-exchanged content includes content acquired by at least two content acquisition apparatuses in a second terminal device of the second user; and
display, in response to a trigger operation of the first user on the exchange control, an interaction interface for acquiring target exchange content.

According to one or more embodiments of the present disclosure, the processing module is configured to:
display, within the interaction interface, an image content acquired by a first content acquisition apparatus preset in a first terminal device of the first user and display the first virtual object, where the first virtual object is used to simulate action information corresponding to the first user acquired by the first content acquisition apparatus preset in the first terminal device; and
generate the target exchange content in response to a trigger operation of the first user on an acquisition control preset within the interaction interface.

According to one or more embodiments of the present disclosure, the interaction module is configured to:
send, in response to a trigger operation of the first user on a send control preset within the interaction interface, the target exchange content including the first virtual object to the chat interface associated with the second user.

According to one or more embodiments of the present disclosure, the apparatus further includes:
an obtaining module is configured to obtain at least one target media content sent by the second user; and
a display module is configured to display the at least one target media content within the chat interface; or
the apparatus further includes:
   a display module is configured to display prompt information that is preset based on the at least one target media content; and
   a processing module is configured to display, in response to a trigger operation of the first user on prompt information associated with the second user, a chat interface associated with the second user.

According to one or more embodiments of the present disclosure, the display module is configured to:
determine a second virtual object corresponding to the second user; and
display, in the prompt information, prompt content associated with the at least one target media content and the second virtual object.

According to one or more embodiments of the present disclosure, the apparatus further includes:
a determination module is configured to determine, in response to a trigger operation of the first user on a message interface, a second virtual object of a second user corresponding to each chat content within the message interface, where a plurality of chat contents are displayed in the message interface;
   and
a display module is configured to display, within the message interface, second virtual objects of second users corresponding to the plurality of chat contents respectively in an order in which the plurality of chat contents are displayed.

According to one or more embodiments of the present disclosure, the display module is configured to:
determine status information corresponding to each of the second virtual objects, where the status information is preset by the second user; and
for each of the second virtual objects within the message interface, display a second virtual object associated with the status information, where the second virtual objects corresponding to the plurality of chat contents are correspondingly displayed in the order in which the plurality of chat contents are displayed.

According to one or more embodiments of the present disclosure, the apparatus further includes:
a display module is configured to display, in response to a trigger operation of the first user on any second virtual object, a chat interface associated with a second user corresponding to the second virtual object.

According to one or more embodiments of the present disclosure, there is provided an electronic device. The electronic device includes: at least one processor and a memory, where
the memory stores computer-executable instructions; and
the computer-executable instructions stored in the memory, when executed by the at least one processor, cause the at least one processor to perform the virtual object-based interaction method according to the above embodiments and various possible designs of the above embodiments.

According to one or more embodiments of the present disclosure, a computer-readable storage medium is provided. The computer-readable storage medium stores computer-executable instructions that, when executed by a processor, cause the virtual object-based interaction method according to the above embodiments and various possible designs of the above embodiments to be implemented.

According to one or more embodiments of the present disclosure, a computer program product is provided. The computer program product includes a computer program that, when executed by a processor, causes the virtual object-based interaction method according to the above embodiments and various possible designs of the above embodiments to be implemented.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A virtual object-based interaction method, comprising:
displaying, in response to a preset interaction operation triggered by a first user within a chat interface associated with a second user, an interaction interface corresponding to the preset interaction operation, and obtaining, in real time, action information corresponding to the first user, wherein the second user is a user that has a preset association relationship with the first user;
displaying, within the interaction interface, an interaction content associated with the preset interaction operation and a first virtual object pre-generated by the first user, wherein the first virtual object is configured to simulate the action information corresponding to the first user; and
performing an interaction operation with the second user based on the first virtual object.

2. The method according to claim 1, wherein the chat interface comprises a first interaction control that is preset; and
the displaying, in response to a preset interaction operation triggered by a first user within a chat interface associated with a second user, an interaction interface corresponding to the preset interaction operation comprises:
displaying the interaction interface in response to a trigger operation of the first user on the first interaction control.

3. The method according to claim 2, wherein the displaying, within the interaction interface, an interaction content associated with the preset interaction operation and a first virtual object pre-generated by the first user comprises:
displaying, in a first display area within the interaction interface, a second virtual object pre-generated by the second user, wherein the second virtual object is configured to simulate action information corresponding to the second user; and
displaying the first virtual object in a second display area within the interaction interface.

4. The method according to claim 2 or 3, wherein the performing an interaction operation with the second user based on the first virtual object comprises:
obtaining, based on a voice content generated during interaction between the first user and the second user, text information corresponding to the voice content; and
displaying, within the interaction interface, the text information corresponding to the voice content.

5. The method according to any one of claims 2 to 4, wherein the displaying, within the interaction interface, an interaction content associated with the preset interaction operation and a first virtual object pre-generated by the first user comprises:
displaying, in the first display area within the interaction interface, an image content acquired by a second terminal device of the second user, and displaying a second virtual object pre-generated by the second user; and
displaying, in a second display area within the interaction interface, an image content acquired by a first terminal device of the first user, and displaying the first virtual object.

6. The method according to claim 5, wherein the displaying, in a first display area within the interaction interface, an image content acquired by a second terminal device of the second user, and displaying a second virtual object pre-generated by the second user comprises:
displaying, in the first display area within the interaction interface, an image content acquired by a first content acquisition apparatus preset in the second terminal device of the second user, and displaying the second virtual object pre-generated by the second user, wherein the second virtual object is configured to simulate the action information corresponding to the second user acquired by a second content acquisition apparatus preset in the second terminal device; and/or
the displaying, in a second display area within the interaction interface, an image content acquired by a first terminal device of the first user, and displaying the first virtual object comprises:
displaying, in the second display area within the interaction interface, an image content acquired by a first content acquisition apparatus preset in the first terminal device of the first user, and displaying the first virtual object, wherein the first virtual object is configured to simulate the action information corresponding to the first user acquired by the first content acquisition apparatus preset in the first terminal device.

7. The method according to claim 1, wherein at least one target media content sent by the second user is displayed within the chat interface; and
the displaying, in response to a preset interaction operation triggered by a first user within a chat interface associated with a second user, an interaction interface corresponding to the preset interaction operation comprises:
displaying, in response to a trigger operation of the first user on any of the at least one target media content, an interaction interface for playback of the target media content.

8. The method according to claim 7, wherein the displaying, within the interaction interface, an interaction content associated with the preset interaction operation and a first virtual object pre-generated by the first user comprises:
displaying the target media content in a first display area within the interaction interface; and
displaying the first virtual object in a second display area within the interaction interface.

9. The method according to claim 8, wherein the performing an interaction operation with the second user based on the first virtual object comprises:
during the playback of the target media content, performing a recording operation on action information of the first virtual object to obtain a recording result; and
sending the recording result to the chat interface.

10. The method according to any one of claims 7 to 9, wherein the displaying, within the interaction interface, an interaction content associated with the preset interaction operation and a first virtual object pre-generated by the first user comprises:
playing the target media content within the interaction interface; and
displaying, in a display area preset within the interaction interface, the first virtual object and a second virtual object pre-generated by the second user, respectively.

11. The method according to any one of claims 1 to 10, wherein the displaying, in response to a preset interaction operation triggered by a first user within a chat interface associated with a second user, an interaction interface corresponding to the preset interaction operation comprises:
displaying, within the chat interface, to-be-exchanged content sent by the second user and an exchange control associated with the to-be-exchanged content, wherein the to-be-exchanged content comprises content acquired by at least two content acquisition apparatuses in a second terminal device of the second user; and
displaying, in response to a trigger operation of the first user on the exchange control, an interaction interface for acquiring target exchange content.

12. The method according to claim 11, wherein the displaying, within the interaction interface, an interaction content associated with the preset interaction operation and a first virtual object pre-generated by the first user comprises:
displaying, within the interaction interface, an image content acquired by a first content acquisition apparatus preset in a first terminal device of the first user, and displaying the first virtual object, wherein the first virtual object is configured to simulate action information corresponding to the first user acquired by the first content acquisition apparatus preset in the first terminal device; and
generating the target exchange content in response to a trigger operation of the first user on an acquisition control preset within the interaction interface.

13. The method according to claim 12, wherein the performing an interaction operation with the second user based on the first virtual object comprises:
sending, in response to a trigger operation of the first user on a send control preset within the interaction interface, the target exchange content comprising the first virtual object to the chat interface associated with the second user.

14. The method according to any one of claims 1 to 13, wherein before the displaying, in response to a preset interaction operation triggered by a first user within a chat interface associated with a second user, an interaction interface corresponding to the preset interaction operation, the method further comprises:
obtaining at least one target media content sent by the second user; and
displaying the at least one target media content within the chat interface; or
before the displaying, in response to a preset interaction operation triggered by a first user within a chat interface associated with a second user, an interaction interface corresponding to the preset interaction operation, the method further comprises:
displaying prompt information that is preset based on the at least one target media content; and
displaying, in response to a trigger operation of the first user on prompt information associated with the second user, a chat interface associated with the second user.

15. The method according to claim 14, wherein the displaying prompt information that is preset based on the at least one target media content comprises:
determining a second virtual object corresponding to the second user; and
displaying, in the prompt information, prompt content associated with the at least one target media content and the second virtual object.

16. The method according to any one of claims 1 to 15, further comprising:
determining, in response to a trigger operation of the first user on a message interface, a second virtual object of a second user corresponding to each chat content within the message interface, wherein a plurality of chat contents are displayed in the message interface; and
displaying, within the message interface, second virtual objects of second users corresponding to the plurality of chat contents respectively in an order in which the plurality of chat contents are displayed.

17. The method according to claim 16, wherein the displaying, within the message interface, second virtual objects of second users corresponding to the plurality of chat contents respectively in an order in which the plurality of chat contents are displayed comprises:
determining status information corresponding to each of the second virtual objects, wherein the status information is preset by the second user; and
for each of the second virtual objects within the message interface, displaying a second virtual object associated with the status information, wherein the second virtual objects corresponding to the plurality of chat contents are correspondingly displayed in the order in which the plurality of chat contents are displayed.

18. The method according to claim 16 or 17, wherein after the displaying, within the message interface, second virtual objects of second users corresponding to the plurality of chat contents respectively in an order in which the plurality of chat contents are displayed, the method further comprises:
displaying, in response to a trigger operation of the first user on a second virtual object, a chat interface associated with a second user corresponding to the second virtual object.

19. A virtual object-based interaction apparatus, comprising:
a display module, configured to display, in response to a preset interaction operation triggered by a first user within a chat interface associated with a second user, an interaction interface corresponding to the preset interaction operation, and obtain, in real time, action information corresponding to the first user, wherein the second user is a user that has a preset association relationship with the first user;
a processing module, configured to display, within the interaction interface, an interaction content associated with the preset interaction operation and a first virtual object pre-generated by the first user, wherein the first virtual object is configured to simulate the action information corresponding to the first user; and
an interaction module, configured to perform an interaction operation with the second user based on the first virtual object.

20. An electronic device, comprising: a processor and a memory, wherein
the memory stores computer-executable instructions; and
the computer-executable instructions stored in the memory, when executed by the processor, cause the processor to perform the virtual object-based interaction method according to any one of claims 1 to 18.

21. A computer-readable storage medium, storing computer-executable instructions that, when executed by a processor, cause the virtual object-based interaction method according to any one of claims 1 to 18 to be implemented.

22. A computer program product, comprising a computer program that, when executed by a processor, causes the virtual object-based interaction method according to any one of claims 1 to 18 to be implemented.
